(19) **Europäisches Patentamt**

**European Patent Office**

**Office européen des brevets**

(11) **EP 1 088 209 B1**

(12) **EUROPÄISCHE PATENTSCHRIFT**

(45) Veröffentlichungstag und Bekanntmachung des Hinweises auf die Patenterteilung:
**24.11.2004 Patentblatt 2004/48**

(21) Anmeldenummer: **99939336.6**

(22) Anmeldetag: **16.06.1999**

(51) Int Cl.⁷: **G01L 1/24**, G01M 11/08

(86) Internationale Anmeldenummer:
**PCT/DE1999/001755**

(87) Internationale Veröffentlichungsnummer:
**WO 1999/067613 (29.12.1999 Gazette 1999/52)**

(54) **FASEROPTISCHE DETEKTIONSANORDNUNG FÜR KRÄFTE ODER SPANNUNGEN**

FIBRE OPTIC DETECTION DEVICE FOR FORCES OR STRAINS

DISPOSITIF A FIBRES OPTIQUES POUR DETECTER DES FORCES OU DES TENSIONS

(84) Benannte Vertragsstaaten:
**CH DE FR GB LI NL**

(30) Priorität: **19.06.1998 DE 19827389**

(43) Veröffentlichungstag der Anmeldung:
**04.04.2001 Patentblatt 2001/14**

(73) Patentinhaber: **Deutsches Zentrum für Luft- und Raumfahrt e.V.**
**51147 Köln (DE)**

(72) Erfinder:
 • **FÜRSTENAU, Norbert**
  **D-38104 Braunschweig (DE)**
 • **SCHMIDT, Markus**
  **D-31137 Hildesheim (DE)**

(74) Vertreter: **Lins, Edgar, Dipl.-Phys. Dr.jur. et al**
**GRAMM, LINS & PARTNER**
**Theodor-Heuss-Strasse 1**
**38122 Braunschweig (DE)**

(56) Entgegenhaltungen:
**US-A- 4 947 693**        **US-A- 5 649 035**

EP 1 088 209 B1

**Beschreibung**

Die Erfindung betrifft eine Detektionsanordnung mit einer Strahlungsquelle zur Detektion von auf eine Detektionseinrichtung einwirkenden Kräften oder Spannungen, bei der die Detektoreinrichtung einen auf einer Detektorfläche in mehreren Windungen oder Mäandern verlegten Lichtwellenleiter, der eine Länge von wenigstens etwa 10 m aufweist und in dessen einen Ende Strahlung der Strahlungsquelle einkoppelbar ist, und einen Photodetektor aufweist, dessen Ausgangssignal zur Bildung eines Alarm- oder Messsignals verarbeitbar ist.

Die Detektion von auf eine Detektoreinrichtung einwirkenden Kräften oder Spannungen wird für zahlreiche Anwendungen benötigt. Mit ihr ist es möglich, stetige Verformungen oder Vibrationen von Strukturen, wie Bauwerken, Masten o.dgl. zu erkennen und auszuwerten.

Eine primäre Anwendung für die vorliegende Erfindung liegt im Bereich der Sicherheits- und Überwachungstechnik, durch die beispielsweise in Form von Schaltmatten der Zugang zu abzusichernden Bereichen überwacht werden soll. Derartige Schaltmatten sind auf der Basis von Druckwellenschaltern oder elektrischen Kontakten, die bei der Belastung der Matte geschlossen werden, bekannt. Elektrische Schaltmatten sind allerdings gegen Feuchtigkeit empfindlich und bergen die Gefahr der Funkenbildung, sodass insbesondere die Anwendung in explosionsgefährdeten Bereichen problematisch ist. Matten mit Druckwellenschaltern erfordern druckluftführende Schläuche, die in größeren Längen nicht einfach in Matten zu integrieren sind und deren Miniaturisierung begrenzt ist. Darüber hinaus sind derartige Schaltmatten wartungsintensiv.

Durch US 5,649,035 ist eine Einrichtung der eingangs erwähnten Art bekannt, bei der ein optischer Leiter in zahlreichen Windungen verlegt worden ist, um eine möglichst große Länge zu erreichen. Ein von einem Laser generierter optischer Impuls wird von reflektierenden Markierungen in der optischen Faser reflektiert. Die Zeitverzögerungen der reflektierten, empfangenen Signale wird zur Bestimmung der einwirkenden Kräfte oder Spannungen verwendet.

Gemäß US 4,947,693 wird Licht einer Lichtquelle durch eine in mehreren Kurven verlegte optische Faser gesandt, sodass durch auf die optische Faser einwirkende Kräfte die durch die optische Faser geleitete Lichtintensität abgeschwächt wird. Ein Detektor am Ende der Lichtfaser dient somit zur Messung der durchgelassenen Lichtintensität als Maß für die Belastung.

Zur akustischen Wellendetektion, Spannungslokalisierung und zur Messung von Auswirkungen von Temperaturänderungen ist es bekannt, in eine optische Faser Licht, beispielsweise einer Laserdiode oder eines Helium-Neon-Lasers einzukoppeln, das sich in der optischen Faser mit zwei Moden ausbreitet (M. Spajer "Linear phase detection for a Bimodal fiber sensor", Optics Letters, Vol. 13 No. 3, 239 - 241). Die Überlagerung der beiden Moden bildet in der Glasfaser ein Interferenzmuster aus, so daß eine durch Kraft oder Spannung verursachte Längenänderung der Faser zu einer Änderung des am Ende der Faser ausgekoppelten Signals führt. Die erzielbare Auflösung liegt bei einer Längenänderung von 4 μm. Die durch die Zwei-Moden-Interferenz hervorgerufene Änderung der Strahlung an der Auskoppelfläche äußert sich durch eine Variation der lokalen Lichtverteilung in der Ausgangsfläche, so daß sich die Detektion aufwendig gestaltet, da Bereiche der Ausgangsfläche differenziert bezüglich der Strahlungsintensität detektiert werden müssen.

Durch DE 38 02 527 C2 und EP 0 562 891 A1 ist es bekannt, eine Detektionsanordnung der eingangs erwähnten Art zu erstellen, bei der beispielsweise in einer Matte ein Lichtwellenleiter mäanderförmig verlegt ist, wobei die Verlegung so ausgebildet ist, daß sich eine Vielzahl von Krümmungen des Lichtwellenleiters auch senkrecht zur Verlegungsebene ergeben. Durch die Ausübung eines mechanischen Drucks auf den so verlegte Lichtwellenleiter entstehen Lichtleitungsverluste für ein in den Lichtwellenleiter an einem Ende eingekoppeltes Licht, so daß ein Photodetektor am anderen Ende durch Belastungen eine Verringerung der ankommenden Lichtintensität messen kann. Die Empfindlichkeit der Intensitätsmessung ist für einen einfachen mäanderförmigen Lichtwellenleiter gering. Wird die Empfindlichkeit gemäß der EP 0 562 891 A1 durch die Ausbildung von zusätzlichen Krümmungen mit einer mäanderförmigen Verlegung auch senkrecht zur Verlegungsebene erhöht, entsteht ein erheblicher Zusatzaufwand bei der Erstellung der Detektormatte.

Es ist grundsätzlich bekannt, hochauflösende Sensoren mit Lichtwellenleitern auszubilden, indem der Lichtwellenleiter als Interferometer ausgebildet wird (R. Kist "Meßwerterfassung mit faseroptischen Sensoren" Technisches Messen 51 (1984) S. 205 - 212)). Für dabei realisierte Fabry-Perot-Interferometeranordnungen ist eine Faserlänge des Interferometers von 3 cm angegeben. Entsprechende Faserlängen für Interferometer finden sich in Lee et al. "Optical fiber Fabry-Perot sensors for smart structures" Smart Mater. Struct. 1 (1992) 123 - 127, wo als typische Faser-Fabry-Perot-Interferometerlänge 2 bis 20 mm angegeben ist und in Bhatia et al. "Multiple strain state measurements using conventional and absolute optical fiber-based extrinsic Fabry-Perot interferometric strain sensors" Smart Mater. Struct. 4 (1995) 240 - 245, wo für die Kavitätslänge des extrinsischen Fabry-Perot-Interferometers Längen unterhalb von 1 mm angegeben sind. Lediglich frühere theoretische Überlegungen hatten auch einmal Faserlängen in einer Fabry-Perot-Interferometeranordnung von 40 cm (Petuchowski et al. "A Sensative Fiber-Optic Fabry-Perot Interferometer" IEEE Journal of Quantum Electronics, Vol. QE-17 (1981) 2168 - 2170) oder zwischen 1,4 und 3,7 m (Franzen et al. "Long optical-fiber Fabry-Perot interferometers" Applied Optics Vol. 20 (1981) 3991-3992) angegeben, ohne daß sich hieraus eine praktische Anwendbarkeit ergeben hätte.

Für die Verwendung von Interferometern sind monomodige Lichtwellenleiter für das Licht der verwendeten Lichtquelle vorausgesetzt worden (Kist a.a.O. S. 209 ff., Bhatia et al. a.a.O., S. 241 li.Sp., Petuchowski et al., S. 2168 unter III). Ein industrieller Standard besteht darin, monomodige optische Fasern für die Wellenlänge von 1300 nm und stabilisierte, auf dieser Frequenz ausstrahlende Laserdioden zu verwenden. Aufgrund der geringen Kohärenzlänge dieser Laserdioden ist die Faserlänge des Interferometers auf die genannten üblichen Längen von wenigen cm begrenzt. Eine Anwendung derartiger Fabry-Perot-Interferometer-Sensoren von einigen cm Länge für eine großflächige Detektion scheitert daher an dem hierfür erforderlichen hohen Aufwand; es wäre nämlich ein unrealistisch komplexes Netzwerk von Einzelsensoren zu realisieren. Daher werden derartige Detektionsanordnungen mit geringen Faserlängen für punktförmige Detektionen, beispielsweise in Form von Dehnungs- oder Temperatursensoren, verwendet.

Die vorliegende Erfindung geht von der Problemstellung aus, eine Detektionsanordnung der eingangs erwähnten Art zu erstellen, die eine großflächig ausgebildete Detektoreinrichtung ermöglicht und mit geringem Aufwand und geringen Kosten erstellbar ist.

Ausgehend von dieser Problemstellung ist eine Detektionsanordnung der eingangs erwähnten Art erfindungsgemäß dadurch gekennzeichnet dass, die Strahlungsquelle zur Aussendung einer Strahlung mit einer die Länge des Lichtwellenleiters überschreitenden Kohärenzlänge ausgebildet ist, dass die Enden des Lichtwellenleiters Abschlüsse aufweisen, die so angeordnet sind, dass sie durch Reflexion der Strahlung eine Fabry-Perot-Interferenz bewirken oder der Lichtwellenleiter zu einem Ringresonator zur Ausbildung einer Ringresonator-Interferenz geschlossen ist, dass der Lichtwellenleiter so ausgebildet ist, dass er für die Wellenlänge der Strahlungsquelle eine Mehrmodenausbreitung zulässt und dass der an ein Ende des Lichtwellenleiters angeschlossene Photodetektor für die Intensitätsunterschiede des Interferenzmusters empfindlich ist.

Bei der erfindungsgemäßen Detektionsanordnung wird die Detektoreinrichtung durch einen großflächig verlegten, relativ langen Lichtwellenleiter gebildet, dessen Längenänderung durch die auf ihn einwirkenden Kräfte oder Spannungen zu einer Veränderung des vom Photodetektor aufgenommenen Signals führt. Der lange Lichtwellenleiter ist mit seinen Enden so ausgebildet, dass stationäre oder quasistationäre Interferenzen durch Reflektionen an den Enden gebildet werden, sodass Fabry-Perot-Interferenzen entstehen oder dass durch Ausbildung eines Ringresonators Interferenzen entstehen. Hierzu ist es ausreichend, wenn ein Ende des Lichtwellenleiters als plane, senkrecht zur Längsachse des Lichtwellenleiters stehende Abschlussfläche ausgebildet ist. Der dabei entstehende Übergang zwischen dem Material des Lichtwellenleiters, das vorzugsweise auf Quarzglasbasis gebildet ist, und der Luft führt zu einem Reflektionsfaktor von 4 %, der überraschenderweise ausreicht; um mit einem sehr geringen Reflektionsfaktor am anderen Ende des Lichtwellenleiters, der insbesondere durch Restreflektionen an einem die Einkopplung bewirkenden optischen Richtkoppler oder einer nachgeschalteten Steckverbindung entsteht, ein Interferenzmuster mit einem Interferenzkontrast zwischen 0,3 und 0,7 entstehen zu lassen. Eine Verspiegelung der Abschlussfläche des Lichtwellenleiters ist daher nicht erforderlich. Da erfindungsgemäß der Lichtwellenleiter so ausgebildet ist, dass er eine Mehrmodenausbreitung für die Wellenlänge der Strahlungsquelle zulässt, kann die Detektionsanordnung mit der unüblich großen Länge des Lichtwellenleiters und dennoch preiswert erstellt werden. Die für den langen Lichtwellenleiter benötigte hohe Kohärenzlänge wird beispielsweise durch die Verwendung eines einfachen und preiswerten kohärenten Helium-Neon-Lasers erreicht. Dennoch können erfindungsgemäß handelsübliche und preiswerte Bauelemente der optischen Nachrichtentechnik, insbesondere Lichtwellenleiter und beispielsweise Richtkoppler, verwendet werden, die für die Wellenlänge von 1300 nm einmodig sind. Für die Wellenlänge des Helium-Neon-Lasers findet dann eine Mehrmodenausbreitung statt. Für die Erstellung des erfindungsgemäßen Fabry-Perot-Interferenzmusters entstehen hierdurch überraschenderweise jedoch keine Nachteile.

Vorzugsweise erfolgt die Einkopplung der Strahlung der Strahlungsquelle in den Lichtwellenleiter über ein Eingangstor eines Richtkopplers. Der Photodetektor kann dann vorteilhaft an ein weiteres Eingangstor des Richtkopplers angeschlossen sein, so daß der Photodetektor durch Reflektion ausgekoppelte Interferenzstrahlung empfängt.

Der Photodetektor kann dabei die ausgekoppelte Strahlungsintensität undifferenziert über den Faserquerschnitt detektieren, so daß eine einfache Photodiode ausreicht, um die durch eine Änderung der Länge des Lichtwellenleiters verursachte Bewegung des Interferenzmusters durch eine Detektion der Variation der Intensitäten der Interferenzmaxima und Interferenzminima zu bewirken.

Insbesondere für die Anwendung als Schaltmatte, bei der also der Lichtwellenleiter in einer elastischen Matte verlegt ist, kann es ausreichend sein, für eine preiswerte Alarmgabe den Ausgang des Sensors über einen Verstärker an einen elektro-akustischen Wandler anzuschließen, so daß das Betreten der Sensormatte zu einem akustischen Signal führt. Das akustische Signal entsteht dadurch, daß innerhalb von einigen 1/100 sec einige 10 bis 100 Interferenzmaxima an dem Sensor vorbeiziehen, woraus eine Frequenz im Bereich zwischen 0,1 und 10 kHz resultiert, die direkt hörbar gemacht werden kann.

Durch die Variation der Verlegungsdichte des Lichtwellenleiters wird durch die auftreffende Kraft eine variierte Längenänderung des Lichtwellenleiters bewirkt. Die Änderung der Verlegungsdichte führt daher bei gleicher Belastung zu einer Änderung der Frequenz des gemessenen Signals. Dies kann dazu ausgenutzt werden, in einer elastischen Matte verschiedene Verlegungsdichten des Lichtwellenleiters in verschiedenen Regionen zu realisieren, um durch die unterschiedlichen Frequenzen das Betreten der elastischen Matte in einer bestimmten Region lokalisierbar zu machen.

Die Detektionsanordnung kann auch durch Hintereinanderschaltung von Lichtwellenleitern, beispielsweise in verschiedenen Matten, realisiert werden. Dabei sollte die Gesamtlänge der hintereinander geschalteten Lichtwellenleiter die Kohärenzlänge der Strahlungsquelle nicht überschreiten. Ist dies nicht vermeidbar, kann durch entsprechende Endflächen der Lichtwellenleiter der einzelnen Abschnitte (Matten) innerhalb jeder Matte ein eigenes Fabry-Perot-Interferenzmuster erzeugt werden, so daß an der Auskoppelstelle zwei oder mehrere überlagerte Interferenzmuster wirksam werden.

In einer besonderen Ausführungsform der Erfindung werden die Enden des Lichtwellenleiters mit einer Einkoppeleinrichtung zu einem Ringresonator geschlossen. Auch diese Anordnung ermöglicht stabile und gut detektierbare Interferenzen.

Die Erfindung soll im folgenden anhand von in der Zeichnung dargestellten Ausführungsbeispielen näher erläutert werden.

Es zeigen:

Figur 1 - eine schematische Darstellung eines durch einen Gaslaser gespeisten Lichtwellenleiters innerhalb einer Matte und einer Auswertungs- und Alarmeinrichtung für ein ausgekoppeltes Interferenzsignal

Figur 2 - einen Vertikalschnitt durch die in Figur 1 angedeutete Matte mit dem Lichtwellenleiter

Figur 3 - eine schematische Anordnung analog Figur 1 mit zwei hintereinander angeordneten Lichtwellenleitern in zwei Matten

Figur 4 - eine schematische Darstellung analog Figur 1 mit einem Lichtwellenleiter in einer Matte, der mit einem Richtkoppler zu einem Ringresonator geschlossen ist.

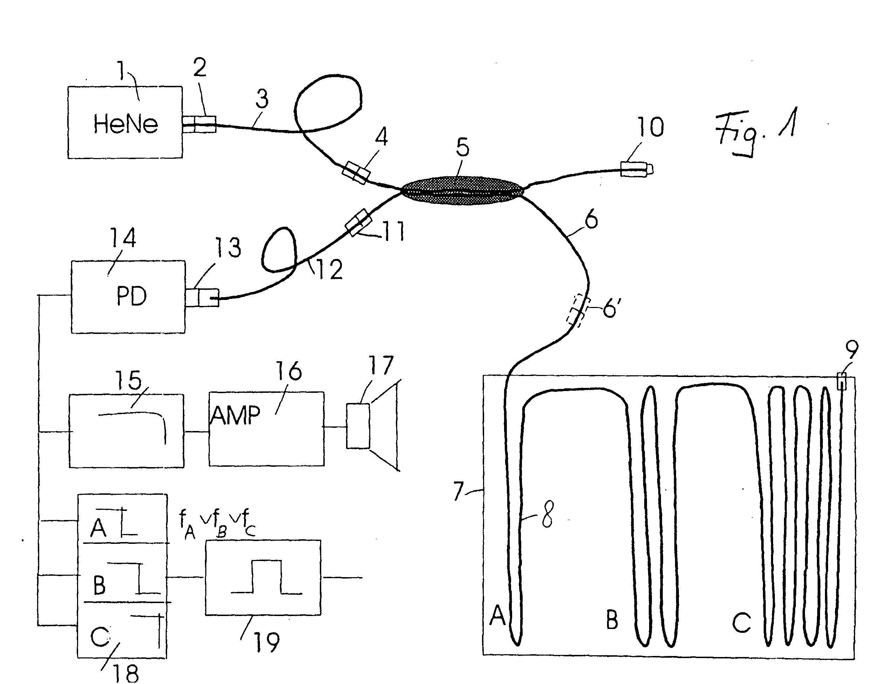

Figur 1 läßt schematisch einen Gaslaser 1, hier in Form eines Helium-Neon-Lasers, erkennen, dessen Strahlenbündel über eine Einkoppeloptik 2 in eine Zuleitungsfaser 3 eingekoppelt wird. Über einen Monomode-Faserstecker 4 ist die Zuleitungsfaser 3 mit einem Richtkoppler 5 verbunden, der als 2x2-Richtkoppler ausgeführt ist. Ein Ausgang des Richtkopplers 5 wird durch einen Lichtwellenleiter 6 gebildet, der in einer Sensormatte 7 als Sensorfaser 8 in zahlreichen mäanderförmigen Windungen verlegt ist und in einem Faserende 9 endet. Der Lichtwellenleiter 6 kann auch über eine (gestrichelt dargestellte) optische Steckverbindung 6' mit dem Richtkoppler 5 verbunden sein.

In der Zeichnung sind schematisch drei Bereiche A, B, C dargestellt, in denen die Sensorfaser 8 in verschiedenen Verlegungsdichten verlegt ist.

Ein weiterer Ausgang des Richtungskopplers 5 führt zu einem reflektionsarmen Abschluß 10, während ein auf der Eingangsseite liegendes weiteres Tor über eine Steckverbindung 11 mit einer Ausgangsfaser 12 verbunden ist, die über eine Einkoppeloptik 13 mit eine Photodetektor 14 verbunden ist.

Das Ausgangssignal des Photodetektors 14 gelangt einerseits auf ein Hochpaßfilter 15 und wird anschließend in einem Leistungsverstärker 16 verstärkt, der einen Lautsprecher 17 als elektro-akustischen Wandler steuert.

Das Ausgangssignal der Photodiode 14 gelangt ferner auf programmierbare, parallel geschaltete Hochpaß- oder Bandfilter 18, in denen die zu den Bereichen A, B, C der Sensormatte gehörenden Frequenzen selektiert werden und anschließend auf einen Schwellwertdetektor 19 gelangen und so bezüglich der Bereiche A, B, C lokalisierbar sind.

Der Gaslaser 1 ist vorzugsweise ein transversal einmodiger handelsüblicher Helium-Neon-Laser mit einer Wellenlänge von 632 nm, einer Ausgangsleistung von 1 mW und einer Kohärenzlänge in der Größenordnung von $L_C$ ≈ 100 m. Die Zuleitungsfaser 3 kann in einfacher Weise ebenfalls als Monomode-Faser für 1300 nm ausgebildet sein und somit einen Kerndurchmesser von 9 µm und einen Manteldurchmesser von 125 µm aufweisen. Ebenfalls ist zweckmäßigerweise der Richtkoppler - ebenso wie der Lichtwellenleiter 6 - einmodig für die Wellenlänge von 1300 nm ausgebildet. Der Lichtwellenleiter hat daher einen Durchmesser von 9 µm des lichtführenden Faserkerns. Für den Lichtwellenleiter 6, den Richtkoppler 5 und die Stecker 4, 11 sowie für die Ausgangsfaser 12 können somit Standard-Telekommunikationskomponenten verwendet werden. Die Ausgangs-Wellenlänge des Gaslasers 1 bildet in diesen Komponenten mehrere (etwa 6 bis 7) Moden aus. Das in den Lichtwellenleiter 6 eingekoppelte Licht des Gaslasers 1 wird am Faserende 9 reflektiert und durchläuft die Sensorfaser 8 ein zweites Mal, wodurch sich der durch die Phasenverschiebung gebildete Meßeffekt verdoppelt. Über den Richtkoppler 5 wird das ein Interferenzmuster ausbildende Licht über die Ausgangsfaser 12 zum Photodetektor 14 geleitet, durch den in Verbindung mit einem Vorverstärker eine opto-elektronische Wandlung durchgeführt wird. Aus dem gewandelten Gesamtsignal, das einen langsam veränderlichen Offset enthalten kann, wird der höherfrequente Wechselsignalanteil über das Hochpaßfilter 15 und den Leistungsverstärker 16 mit dem Lautsprecher 17 akustisch wiedergegeben. Das Tonfrequenzspektrum repräsentiert Stärke und Geschwindigkeit der mechanischen Einwirkung sowie den Ort der Belastung der Sensormatte 7. Die Lokalisierung kann durch die programmierbaren, parallel geschalteten Hochpaß- oder Bandpaßfilter 18 mit nachgeschalteten Schwellwertdetektoren 19 erfolgen. Dabei wird die Tatsache ausgenutzt, daß die Anzahl der Interferenzstreifen pro Zeiteinheit, und damit die Frequenzen des Ausgangssignals des Photodetektors 14, die bei der Be- und Entlastung der Sensorfaser 8 erzeugt werden, mit der Anzahl der gleichzeitig belasteten Faserabschnitte steigt.

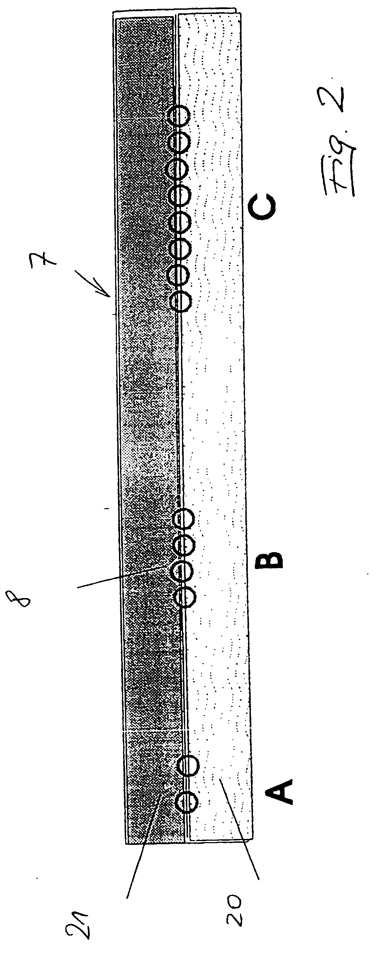

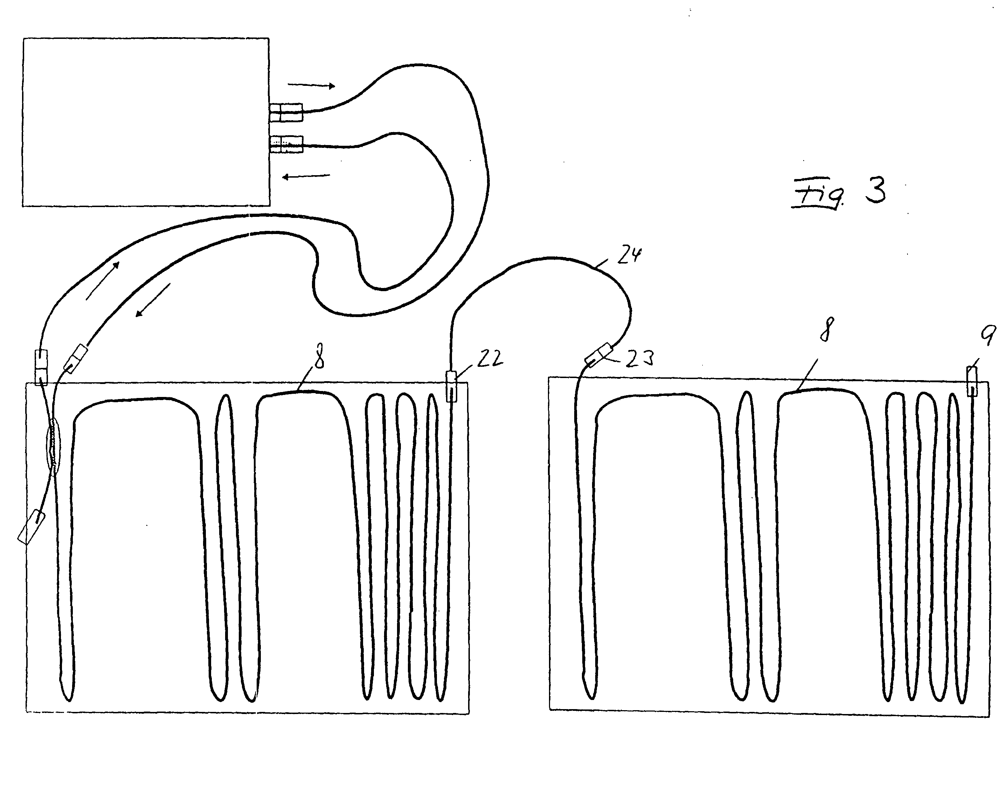

Figur 2 verdeutlicht die Anordnung der Sensorfaser 8 in der Sensormatte 7. Die Sensorfaser 8 ist mäanderförmig in den Bereichen A, B, C auf einer elastischen Trägerschicht 20 fixiert, die von einer ebenfalls elastischen Schicht 21 bedeckt ist. Typische Abmessungen für eine solche Sensormatte 7 sind beispielsweise 2 m Länge x 1 m Breite. Über faseroptische Steckverbindungen 22, 23 können mehrere Sensormatten 7 der beschriebenen Art in Reihe geschaltet werden, wie dies Figur 3 zeigt. Die Anzahl der Sensormatten 7 wird durch Dämpfungsverluste in den Steckverbindungen 22, 23 und durch die maximal zulässige Länge der Sensorfaser 8 begrenzt. Die Gesamtlänge der Sensorfaser 8 darf die Kohärenzlänge $L_C$ des Gaslasers 1 nicht überschreiten. Zwei Sensormatten 7 können unmittelbar aneinander gekoppelt werden, aber auch z.B. über eine Verbindungsfaser 24 von beispielsweise 100 m Länge verbunden sein. Auch eine Parallelschaltung von zwei Reihen von Sensormatten über die beispielsweise zwei Ausgangsarme des Richtkopplers 5 ist möglich. Realisierbar sind auch Anordnungen mit 3x3- oder 4x4-Richtkopplern. Bei der beschriebenen Realisierung mit einem Helium-Neon-Laser und faseroptischen Monomode-Standardkomponenten für 1300 nm wird bei Belastung der Sensorfaser 8 ein wohldefiniertes Interferenzsignal mit einem Interferenzkontrast von $\mu = 0,3$ bis 0,6 beobachtet, wobei das Faserende 9 durch eine nicht beschichtete plane Abschlußfläche gebildet ist. Das Interferenzsignal wird ganz überwiegend durch die Fabry-Perot-Interferenz erzeugt.

Das reflektierte Interferenzsignal eines Fabry-Perot-Interferometers mit niedriger Reflektivität $R_1$, $R_2$ der beiden Reflektoren ist bei schmalbandiger, hochkohärenter Lichtquelle, wie sie ein Helium-Neon-Laser 1 bildet, gegeben durch

$$I_R = I_0\left(R_1 + R_2\right)\left(1 - 2\frac{\sqrt{R_1 R_2}}{R_1 + R_2}\cos\Phi\right)$$

Der gemessene Interferenzkontrast

$$\mu = 2\frac{\sqrt{R_1 R_2}}{R_1 + R_2}$$

ist - wie gesagt - 0,3 bis 0,5. Die plane Abschlußfläche 9 der Sensorfaser 8 hat eine Reflektivität von 4 % (Grenzfläche Quarzglas-Luft). Als zweiter Reflektor wirkt der Richtkoppler 5 oder, falls vorhanden, die zwischen Richtkoppler 5 und Sensorfaser 8 eingesetzte Steckverbindung 6', in denen von der einfallenden Intensität $I_0$ ein Anteil $R_2 I_0$ zurückgestreut wird. Aus der oben genannten Gleichung für den Interferenzkontrast läßt sich $R_2$ in Abhängigkeit der bekannten Werte für $\mu$ und $R_1$ berechnen:

$$R_2 = \left(\frac{\sqrt{R_1}}{\mu}\left(1 - \sqrt{1 - \mu^2}\right)\right)^2$$

Mit $\mu = 0,3$ und $R_1 = 0,04$ ergibt sich $R_2 = 0,00094$, also $R_2 = 1$ ‰.

Trotz eines Reflektivitätsunterschieds von mehr als einer Größenordnung ist überraschenderweise ein für die Signalverarbeitung hinreichend großer Interferenzkontrast von $\mu = 0,3$ bis 0,6 einstellbar. Um die Zuleitung 3 zum faseroptischen Richtkoppler 5 unempfindlich gegenüber Krafteinwirkungen und Verformungen zu machen, kann hierfür eine für die benutzte Wellenlänge von 632 nm monomodige Faser mit entsprechend niedriger cutoff-Wellenlänge (entsprechend einem niedrigen Kerndurchmesser $2a \approx 4\ \mu m$) gewählt werden. Allerdings haben Experimente gezeigt, daß auch eine Zuleitung 3 vom gleichen Typ wie die Sensorfaser 8 eine wesentlich geringere Empfindlichkeit aufweist als der eigentliche Sensorfaserabschnitt zwischen Richtkoppler 5 und Faserende 9. Hierfür ist die Anordnung des als Reflektor ($R_2$) wirkenden Richtkopplers 5 bzw. einer eingesetzten Steckverbindung 6' unmittelbar an der Sensormatte 7 von Bedeutung.

Bei der Hintereinanderschaltung mehrerer Sensormatten 7 sollte die Gesamtlänge der Sensorfaser 8 einschließlich der Verbindungskabel zwischen den Sensormatten 7 bei reflexionsarmen Steckverbindungen die Kohärenzlänge der Lichtquelle nicht wesentlich überschreiten. Bei einer spektralen Breite der Quelle von 1 MHz ergibt sich eine Maximallänge von größenordnungsmäßig 60 m. Experimentell erhält man allerdings auch mit zwei Sensormatten mit jeweils 15 m eingebetteter Sensorfaser 8 und einem 100 m langen Verbindungskabel zwischen den Sensormatten 7 noch keine wesentliche Reduzierung des Interferenzkontrasts.

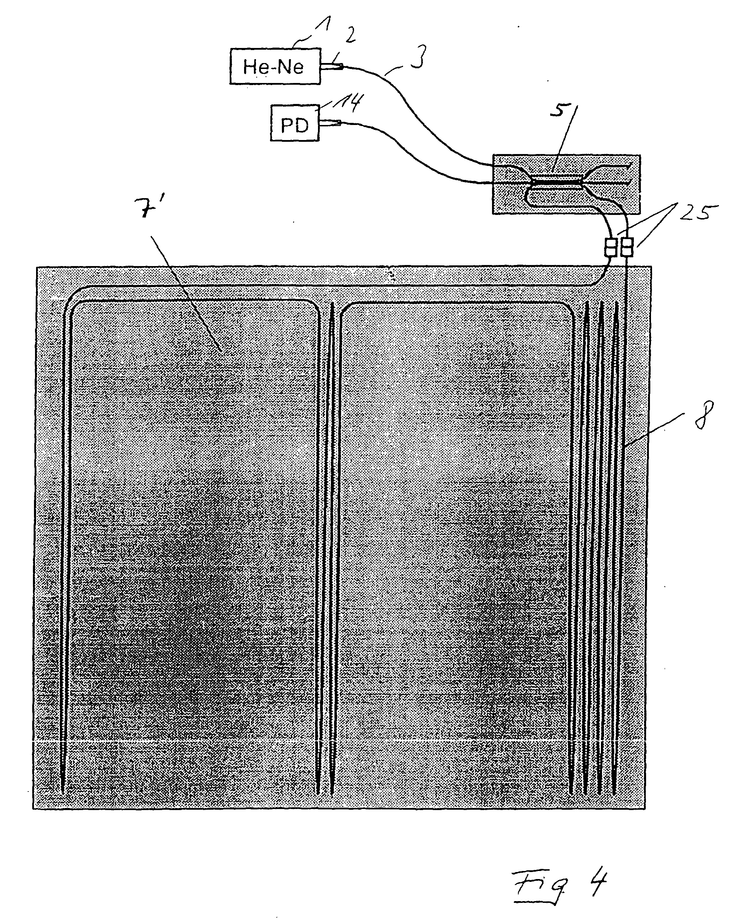

Eine alternative Interferometerarchitektur zur Einbettung in eine Schaltmatte 7 ist ein in Figur 4 dargestellter optischer Ringresonator. Dabei wird die Sensorfaser 8 der Schaltmatte 7' derart mit einem 3x1-Koppler (oder 3x3-Koppler 5 mit zwei entspiegelten Faserenden) verbunden, daß durch Sensorfaser 8 und Richtkoppler 5 ein faseroptischer Ringresonator der Länge L entsteht. Dieser Resonator wird durch den hochkohärenten Gaslaser 1 gespeist, wobei im Fall des 3x3-Kopplers weniger als 1/3 der Laserleistung in die Sensorfaser 8 gelangt. Aufgrund der Rückstreuung durch den Richtkoppler 5 und der Reflektivitäten an nicht idealen Steckverbindungen 25 wird während jedes Resonatorumlaufs der Lichtwelle ein Teil des Lichts in Richtung des Photodetektors 14 reflektiert. Diese sehr geringe Lichtleistung erzeugt einen niedrigen Offset-Pegel am Empfänger.

Ein Durchbiegen der Sensorfaser 8, beispielsweise beim Betreten der Sensormatte 7', bewirkt eine Änderung der Resonatorlänge $\Delta L$, wodurch sich am Empfänger ein Intensitätsverlauf $I_{Sensor}$ nach folgender Gleichung ergibt

$$I_{Sensor} = I_0 \cdot \sum^{i} 1 / \left( \frac{I_i}{I_0} + \frac{4R^2}{(1+R^2)^2} \sin^2\left( \frac{2\pi}{\lambda} \cdot L + \varphi_i \right) \right),$$

wobei $I_i$ und $\varphi_i$ die Amplituden und Phasenlagen unterschiedlicher Anteile des Gesamtsignals, R der Amplitudenreflexionsfaktor, I0 die in den Resonator eingekoppelte Laserleistung und $\lambda$ die Wellenlänge des Lichts sind. Die Gleichung beschreibt die typische Charakteristik in Abhängigkeit der Resonatorlänge L mit den ausgeprägten Resonanzen bei Vielfachen der Wellenlänge $\lambda$. Aufgrund der Mehrmodigkeit der Sensorfaser 8 entsteht im Ringresonator eine Überlagerung von beispielsweise sechs Wellen, die phasenverschoben unter derselben Resonatorbedingung anschwingen.

Die Weiterverarbeitung und Auswertung des Signals des Photodetektors 14 erfolgt nach dem gleichen Prinzip wie in Figur 1 dargestellt. Die Signalfrequenz ist proportional zur Größe und Geschwindigkeit der Be- und Entlastung der Sensorfaser 8 sowie zur Gesamtlänge der gleichzeitig belasteten Faserabschnitte, so daß eine Lokalisierung der Last über Faserbereiche A, B, C mit unterschiedlicher Faserdichte möglich ist.

**Patentansprüche**

1. Detektionsanordnung mit einer Strahlungsquelle (1) zur Detektion von auf eine Detektionseinrichtung (8) einwirkenden Kräften oder Spannungen, bei der die Detektoreinrichtung (8) einen auf einer Detektorfläche in mehreren Windungen oder Mäandern verlegten Lichtwellenleiter (6), der eine Länge von wenigstens etwa 10 m aufweist und in dessen einen Ende Strahlung der Strahlungsquelle (1) einkoppelbar ist, und einen Photodetektor (14) aufweist, dessen Ausgangssignal zur Bildung eines Alarm- oder Messsignals verarbeitbar ist, **dadurch gekennzeichnet, dass** die Strahlungsquelle (1) zur Aussendung einer Strahlung mit einer die Länge des Lichtwellenleiters (6) überschreitenden Kohärenzlänge ($L_C$) ausgebildet ist, dass die Enden des Lichtwellenleiters (6) Abschlüsse (5, 9) aufweisen, die so angeordnet sind, dass sie durch Reflexion der Strahlung eine Fabry-Perot-Interferenz bewirken oder der Lichtwellenleiter (6) zu einem Ringresonator zur Ausbildung einer Ringresonator-Interferenz geschlossen ist, dass der Lichtwellenleiter (6) so ausgebildet ist, dass er für die Wellenlänge der Strahlungsquelle (1) eine Mehrmodenausbreitung zulässt und dass der an ein Ende des Lichtwellenleiters (6) angeschlossene Photodetektor (14) für die Intensitätsunterschiede des Interferenzmusters empfindlich ist.

2. Detektionsanordnung nach Anspruch 1, **dadurch gekennzeichnet, dass** ein Ende (9) des Lichtwellenleiters (6) als plane, senkrecht zur Längsachse des Lichtwellenleiters (6) stehende Abschlussfläche ausgebildet ist.

3. Detektionsanordnung nach Anspruch 2, **dadurch gekennzeichnet, dass** der Reflektionsfaktor der planen Abschlussfläche (9) aus dem Lichtwellenleiter-Luft-Übergang gebildet ist.

4. Detektionsanordnung nach einem der Ansprüche 1 bis 3, **dadurch gekennzeichnet, dass** die Einkopplung der Strahlung der Strahlungsquelle (1) in den Lichtwellenleiter (6) über ein Eingangstor eines Richtkopplers (5) erfolgt und dass der Photodetektor (14) an ein weiteres Eingangstor des Richtkopplers (5) angeschlossen ist.

5. Detektionsanordnung nach einem der Ansprüche 1 bis 4, **dadurch gekennzeichnet, dass** der Lichtwellenleiter (6) ein Einmoden-Lichtwellenleiter für eine oberhalb der Wellenlänge der Strahlungsquelle (1) liegende Wellenlänge ist.

**6.** Detektionsanordnung nach Anspruch 5, **dadurch gekennzeichnet, dass** der Lichtwellenleiter (6) ein Einmoden-Lichtwellenleiter für 1300 nm und die Strahlungsquelle (1) ein Helium-Neon-Laser ist.

**7.** Detektionsanordnung nach Anspruch 4 und einem der Ansprüche 5 und 6, **dadurch gekennzeichnet, dass** auch der Richtkoppler (5) so ausgebildet ist, dass er für die Wellenlänge der Strahlungsquelle (1) eine Mehrmodenausbreitung zulässt.

**8.** Detektionsanordnung nach Anspruch 4 und einem der Ansprüche 5 bis 7, **dadurch gekennzeichnet, dass** auch eine Zuleitung (3) von der Strahlungsquelle (1) zum Richtkoppler (5) und eine ggf. vom Richtkoppler (5) zum Photodetektor (14) führende Ausgangsfaser (12) für eine Mehrmodenausbreitung der Wellenlänge der Strahlungsquelle (1) ausgebildet ist.

**9.** Detektionsanordnung nach einem der Ansprüche 1 bis 8, **dadurch gekennzeichnet, dass** der Ausgang des Photodetektors (14) über einen Verstärker (16) an einen elektroakustischen Wandler (17) angeschlossen ist.

**10.** Detektionsanordnung nach einem der Ansprüche 1 bis 9, **dadurch gekennzeichnet, dass** der Lichtwellenleiter (6) in einer elastischen Sensormatte (7, 7') verlegt ist.

**11.** Detektionsanordnung nach Anspruch 10, **gekennzeichnet durch** verschiedene Verlegungsdichten des Lichtwellenleiters (6) in verschiedenen Regionen (A, B, C) der elastischen Sensormatte (7, 7').

**12.** Detektionsanordnung nach einem der Ansprüche 1 bis 11, **dadurch gekennzeichnet, dass** die Enden des Lichtwellenleiters (6) mit einer Einkoppeleinrichtung (5) zu dem Ringresonator geschlossen sind.

**Claims**

**1.** Detection arrangement comprising a radiation source (1) for the detection of forces or strains acting on a detection device (8), in which the detector device (8) has an optical fibre (6) which is laid on a detector surface in a plurality of turns or meanders, which has a length of at least 10 m and into one end of which radiation from the radiation source (1) can be injected, and a photodetector (14), whose output signal can be processed in order to form an alarm or measured signal, **characterized in that** the radiation source (1) is designed to emit radiation with a coherence length ($L_c$) that exceeds the length of the optical fibre (6), **in that** the ends of the optical fibre (6) have terminations (5, 9) which are arranged in such a way that, by means of reflection of the radiation, they effect Fabry-Perot interference, or the optical fibre (6) is closed to form a ring resonator in order to form ring resonator interference, **in that** the optical fibre (6) is formed in such a way that it permits multimode propagation for the wavelength of the radiation source (1), and **in that** the photodetector (14) connected to one end of the optical fibre (6) is sensitive to the intensity differences of the interference pattern.

**2.** Detection arrangement according to Claim 1, **characterized in that** one end (9) of the optical fibre (6) is formed as a planar terminating surface perpendicular to the longitudinal axis of the optical fibre (6).

**3.** Detection arrangement according to Claim 2, **characterized in that** the reflection factor of the planar terminating surface (9) is formed from the optical fibre-air transition.

**4.** Detection arrangement according to one of Claims 1 to 3, **characterized in that** the radiation from the radiation source (1) is injected into the optical fibre (6) via an input port of a directional coupler (5), and that the photodetector (14) is connected to a further input port of the directional coupler (5).

**5.** Detection arrangement according to one of Claims 1 to 4, **characterized in that** the optical fibre (6) is a single-mode optical fibre for a wavelength lying above the wavelength of the radiation source (1).

**6.** Detection arrangement according to Claim 5, **characterized in that** the optical fibre (6) is a single-mode optical fibre for 1300 nm and the radiation source (1) is a helium-neon laser.

**7.** Detection arrangement according to Claim 4 and either of Claims 5 and 6, **characterized in that** the directional coupler (5) is also formed in such a way that it permits multimode propagation for the wavelength of the radiation source (1).

8.  Detection arrangement according to Claim 4 and one of Claims 5 to 7, **characterized in that** a feed line (3) from the radiation source (1) to the directional coupler (5) and an output fibre (12) possibly leading from the directional coupler (5) to the photodetector (14) are also designed for multimode propagation of the wavelength of the radiation source (1).

9.  Detection arrangement according to one of Claims 1 to 8, **characterized in that** the output of the photodetector (14) is connected via an amplifier (16) to an electro-acoustic converter (17).

10. Detection arrangement according to one of Claims 1 to 9, **characterized in that** the optical fibre (6) is laid in an elastic sensor mat (7, 7').

11. Detection arrangement according to Claim 10, **characterized by** various laying densities of the optical fibre (6) in various regions (A, B, C) of the elastic sensor mat (7, 7').

12. Detection arrangement according to one of Claims 1 to 11, **characterized in that** the ends of the optical fibre (6) are coupled to an injection device (5) to form the ring resonator.


## Revendications

1.  Dispositif de détection comprenant une source de rayonnement (1) pour détecter des forces ou tensions s'exerçant sur un agencement détecteur (8), dans lequel l'agencement détecteur (8) comprend d'une part un guide d'ondes lumineuses (6) posé en plusieurs spires ou méandres sur une surface détectrice, le guide présentant une longueur d'au moins environ 10m et un rayonnement de la source de rayonnement (1) pouvant être injecté dans une première extrémité de ce guide, et d'autre part un photodétecteur (14) dont le signal de sortie peut être traité pour former un signal d'alarme ou de mesure, **caractérisé en ce que** la source de rayonnement (1) est réalisée pour émettre un rayonnement avec une longueur de cohérence ($L_c$) excédant la longueur du guide d'ondes lumineuses (6), **en ce que** les extrémités du guide d'ondes lumineuses (6) présentent des terminaisons (5, 9) qui sont agencées de façon à produire une interférence de Fabry-Perot par réflexion du rayonnement, ou bien le guide d'ondes (6) est fermé en un résonateur annulaire pour faire apparaître une interférence de résonateur annulaire, **en ce que** le guide d'ondes lumineuses (6) est réalisé de façon à permettre une diffusion à plusieurs modes pour la longueur d'onde de la source de rayonnement (1), et **en ce que** le photodétecteur (14) raccordé à une extrémité du guide d'ondes lumineuses (6) est sensible aux différences d'intensité du modèle d'interférence.

2.  Dispositif de détection selon la revendication 1, **caractérisé en ce qu'**une extrémité (9) du guide d'ondes lumineuses est réalisée en tant que face de terminaison plane s'étendant perpendiculairement à l'axe longitudinal du guide d'ondes lumineuses (6).

3.  Dispositif de détection selon la revendication 2, **caractérisé en ce que** le facteur de réflexion de la face de terminaison plane (9) est formé à partir de la transition air-guide d'ondes lumineuses.

4.  Dispositif de détection selon l'une des revendications 1 à 3, **caractérisé en ce que** l'injection du rayonnement de la source de rayonnement (1) dans le guide d'ondes lumineuses (6) a lieu par un portail d'entrée d'un coupleur directionnel (5), et **en ce que** le photodétecteur (14) est raccordé à un autre portail d'entrée du coupleur directionnel (5).

5.  Dispositif de détection selon l'une des revendications 1 à 4, **caractérisé en ce que** le guide d'ondes lumineuses (6) est un guide d'ondes lumineuses unimodal pour une longueur d'onde située au-dessus de la longueur d'onde de la source de rayonnement (1).

6.  Dispositif de détection selon la revendication 5, **caractérisé en ce que** le guide d'ondes lumineuses (6) est un guide d'ondes lumineuses unimodal pour 1300 nm et la source de rayonnement (1) est un laser Hélium-Néon

7.  Dispositif de détection selon la revendication 4 et l'une des revendications 5 et 6, **caractérisé en ce que** le coupleur directionnel (5) est également réalisé pour permettre une diffusion multi-modes pour la longueur d'onde de la source de rayonnement (1).

**8.** Dispositif de détection selon la revendication 4 et l'une des revendications 5 à 7, **caractérisé en ce qu'**également une ligne d'acheminement (3) allant de la source de rayonnement (1) au coupleur directionnel (5), et le cas échéant une fibre de sortie (12) conduisant du coupleur directionnel (5) au photodétecteur (14), sont réalisées pour une diffusion multi-modes de la longueur d'onde de la source de rayonnement (1).

**9.** Dispositif de détection selon l'une des revendications 1 à 8, **caractérisé en ce que** la sortie du photo-détecteur (14) est raccordée à un convertisseur électroacoustique (17) par l'intermédiaire d'un amplificateur (16).

**10.** Dispositif de détection selon l'une des revendications 1 à 9, **caractérisé en ce que** le guide d'ondes lumineuses (6) est posé dans un matelas capteur (7, 7') élastique.

**11.** Dispositif de détection selon la revendication 10, **caractérisé par** différentes densités de pose du guide d'ondes lumineuses (6) dans différentes régions (A, B, C) du matelas capteur élastique (7, 7').

**12.** Dispositif de détection selon l'une des revendications 1 à 11, **caractérisé en ce que** les extrémités du guide d'ondes lumineuses (6) sont raccordées au résonateur annulaire par un agencement d'injection (5).

Fig. 1

Fig. 2

EP 1 088 209 B1

Fig. 3

Fig 4